# EUROPEAN PATENT SPECIFICATION

(11) **EP 4 099 490 B1**
(45) Date of publication and mention of the grant of the patent: **12.11.2025**
(21) Application number: 21856068.8
(22) Date of filing: 13.07.2021
(51) Int. Cl.: H01M 50/204, H01M 50/507, H01M 50/514, H01M 50/691, H01M 50/209

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 14.08.2020 KR 20200102382
(43) Date of publication of application: 07.12.2022
(73) Proprietor: LG Energy Solution, Ltd., Seoul 07335 (KR)
(72) Inventor: KIM, Soo Youl, Daejeon 34122 (KR); LEE, Youngho, Daejeon 34122 (KR); PARK, Junkyu, Daejeon 34122 (KR); YOON, Han Ki, Daejeon 34122 (KR); IN, Jeonghyeon, Daejeon 34122 (KR)
(74) Representative: Plasseraud IP
(86) International application number: PCT/KR2021/008943
(87) International publication number: WO 2022/035061

(56) References cited:
- CN-A- 109 935 921
- CN-A- 109 935 921
- JP-A- 2019 192 536
- JP-A- 2019 192 536
- JP-B2- 5 643 468
- JP-B2- 5 643 468
- KR-A- 20190 023 582
- KR-A- 20200 008 624
- KR-A- 20200 008 624

## Description

### [TECHNICAL FIELD]

The present invention relates to a battery module and a battery pack including the same, and more particularly, to a battery module including a structure for preventing penetration of moisture, and a battery pack including the same.

### [BACKGROUND ART]

A secondary battery has attracted much attention as an energy source in various products such as a mobile device and an electric vehicle. The secondary battery is a potent energy resource that can replace the use of existing products using fossil fuels, and is in the spotlight as an environment-friendly energy source because it does not generate by-products due to energy use.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series/parallel to configure a battery pack, a method of configuring a battery module composed of at least one battery cell and then adding other components to at least one battery module to configure a battery pack is common.

Such a battery module may include a battery cell stack in which a plurality of battery cells are stacked, a module frame for accommodating the battery cell stack, and a busbar frame for covering the front and rear surfaces of the battery cell stack and equipped with a busbar.

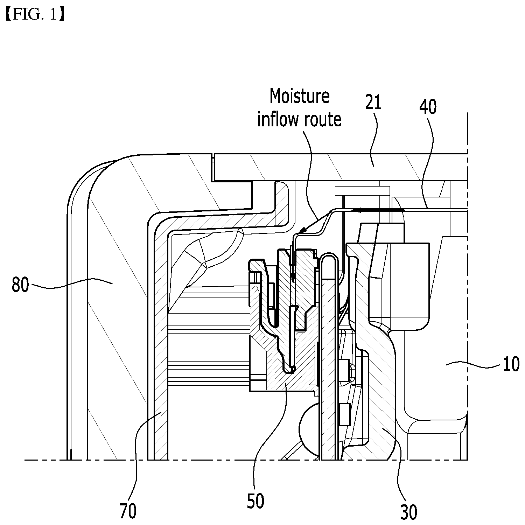

Fig. 1 is a diagram showing a moisture inflow route of a conventional battery module. Referring to Fig. 1, a conventional battery module includes a battery cell stack 10 in which a plurality of battery cells are stacked, a module frame for covering the battery cell stack 10, a busbar frame 30 for covering the front and rear surfaces of the battery cell stack 10, an insulating cover 70 for covering the outer side surface of the busbar frame 30, and an end plate 80 for covering the outer side surface of the insulating cover.

At this time, a connector 50 coupled with a flexible flat cable (FFC) 40 can be formed on the outer side portion of the busbar frame 30. More specifically, a busbar frame 30 is formed on the front and rear surfaces of the battery cell stack 10, respectively, a connector 50 is formed on the outer side surface of each busbar frame 30, and the FFC 40 is formed in the upper side space of the battery cell stack 10, so that the connectors 50 formed on the two busbar frames 30 can be connected with each other.

During the assembly process of FFC, a robot arm equipment can be used to automate the battery module assembly line. Here, the robot arm grasps the FFC and assembles it in a vertical direction toward the upper surface portion of the battery cell stack. The FFC, which has moved downward in the vertical direction, can be combined with the connector located at both ends of the battery cell stack. An upper portion of the connector coupled with the FFC moving vertically downward may be formed in an open form.

At this time, when the inside of the battery module is placed under a high temperature and high humidity environment, condensed moisture may be formed on the lower side surface of the upper portion 21 of the module frame, and moisture moving along the lower side surface of the upper portion 21 may be flown into the inside of the connector 50 through the FFC or may be directly flown into the inside of the connector 50.

When moisture flows into the inside of the connector, a short circuit may occur at the connection part between the connector 50 and the FFC 40, and when a short circuit occurs, the sensing function of the connector and the FFC may be damaged, and an ignition phenomenon may occur inside the battery module.

Examples of background art can be found in KR20200008624A.

### [DETAILED DESCRIPTION OF THE INVENTION]

### [Technical Problem]

It is an object of the present invention to provide a battery module including a structure that allows the moisture inside the battery module to be safely discharged outside the module.

The objects of the present invention are not limited to the aforementioned objects, and other objects which are not described herein should be clearly understood by those skilled in the art from the following detailed description.

### [Technical Solution]

In order to achieve the above object, a battery module according to the independent claim 1 is provided.

The insulating cover may include an extension portion that is extendedly formed on the lower side of the film portion.

The extension portion may be formed so as to be inclined downward in a direction in which the end plate is located.

The tip end of the extension portion may be formed so as to be curved upward.

A crack between the upper side portion of the module frame and the end plate may be connected with the extension portion.

The passage may be connected with the outside of the module frame, and moisture guided to the passage may be discharged to the outside of the module frame through the passage.

The film portion may be formed into a size corresponding to the upper side portion of the module frame.

The film portion may be coupled with both side edge portions of the upper side portion of the module frame by an adhesive member, respectively, and a moisture moving passage may be formed in the space formed between the adhesive members.

The film portion may be formed of a polycarbonate sheet.

According to another embodiment of the present disclosure, there is provided a battery pack comprising the above-mentioned battery module.

### [ADVANTAGEOUS EFFECTS]

A battery module and a battery pack including the same according to one embodiment of the present disclosure can discharge moisture formed on the lower surface of the upper side portion to the outside through a moisture barrier film, by forming a moisture barrier film between the connector and the upper side portion of the module frame.

The effects of the present invention are not limited to the effects mentioned above and additional other effects not described above will be clearly understood from the description of the appended claims by those skilled in the art.

### [BRIEF DESCRIPTION OF THE DRAWINGS]

Fig. 1 is a diagram showing a moisture inflow route of a conventional battery module;
Fig. 2 is an exploded perspective view of a battery module according to one embodiment of the present disclosure;
Fig. 3 is a diagram showing a state in which the battery module of Fig. 2 is assembled;
Fig. 4 is a cross-sectional view showing a section A-A' of Fig. 3; and
Fig. 5 is a partial view showing the direction in which moisture moves through the moisture barrier film.

### [DETAILED DESCRIPTION OF THE EMBODIMENTS]

It should be appreciated that the exemplary embodiments, which will be described below, are illustratively described to assist in the understanding the present invention. However, in the description of the present disclosure, the specific descriptions and illustrations of publicly known functions or constituent elements will be omitted when it is determined that the specific descriptions and illustrations may unnecessarily obscure the subject matter of the present disclosure. In addition, in order to help understand the present disclosure, the accompanying drawings are not illustrated based on actual scales, but parts of the constituent elements may be exaggerated in size.

As used herein, terms such as first, second, and the like may be used to describe various components, and the components are not limited by the terms. The terms are used only to discriminate one component from another component.

Further, the terms used herein are used only to describe specific exemplary embodiments, and are not intended to limit the scope of the present invention. A singular expression includes a plural expression unless they have definitely opposite meanings in the context. It should be understood that the terms "comprise", "include", and "have" as used herein are intended to designate the presence of stated features, numbers, steps, movements, constitutional elements, parts or combinations thereof, but it should be understood that they do not preclude a possibility of existence or addition of one or more other features, numbers, steps, movements, constitutional elements, parts or combinations thereof.

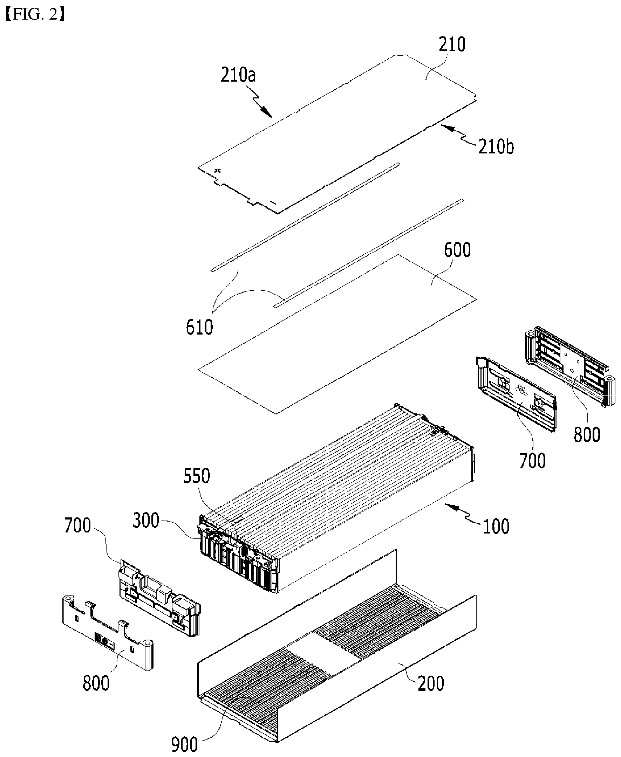

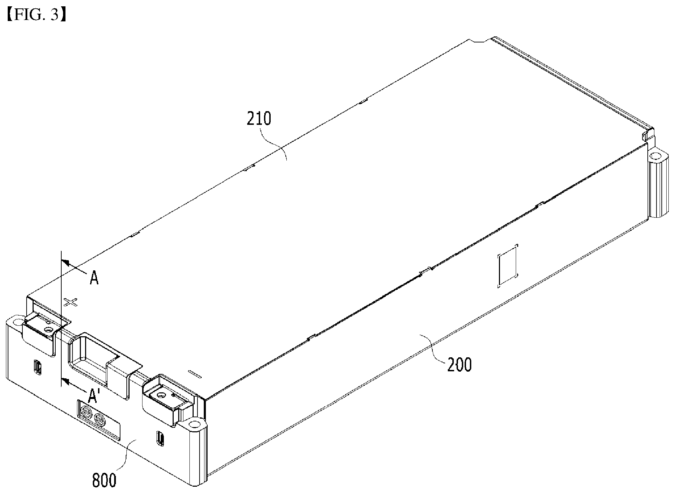

Below, a battery module according to one embodiment of the present invention will be described with reference to Figs. 2 and 3.

Fig. 2 is an exploded perspective view of a battery module according to one embodiment of the present invention. Fig. 3 is a diagram showing a state in which the battery module of Fig. 2 is assembled.

Referring to Figs. 2 and 3, the battery module according to one embodiment of the present invention includes a battery cell stack 100 in which a plurality of battery cells are stacked, a module frame 200 for accommodating the battery cell stack 100; and a busbar frame 300 formed at both ends of the battery cell stack 100. The battery module also includes a connecting portion 400 that connects the busbar frames 300 arranged at both ends, respectively, and is formed of a flexible flat cable (FFC), and a connector 500 formed on the busbar frame 300 and coupled with the connecting portion 400. A film portion 600 is formed between the connector 500 and the upper side portion 210 of the module frame 200.

The battery cell is a secondary battery and can be configured into a pouch-type secondary battery. Such a battery cell may be composed of a plurality of battery cells, and the plurality of battery cells may be stacked together so as to be electrically connected with each other, thereby forming the battery cell stack 100. Each of the plurality of battery cells may include an electrode assembly, a cell case, and an electrode lead protruding from the electrode assembly.

The module frame 200 accommodates the battery cell stack 100. The module frame 200 can be formed of a U-shaped frame 200 and an upper side portion 210 as shown in Fig. 2. The U-shaped frame 200 may include a bottom portion and both side portions. Unlike illustrated in Fig. 2, the module frame 200 can be formed of upper, lower, left and right surfaces, so that is can be formed in the form of covering the four surfaces of upper, lower, left and right of the battery cell stack 100. The battery cell stack 100 accommodated inside the module frame 200 can be physically protected through the module frame 200.

The busbar frame 300 is formed so as to cover the front and rear surfaces of the battery cell stack 100, is located on the front and rear surfaces of the battery cell stack 100, and can be connected with electrode leads formed to extend from the plurality of battery cells. In more detail, electrode leads extended through the busbar frame 300 are coupled to the plurality of busbars mounted on the busbar frame 300, so that the battery cells and the busbar can be electrically connected.

A end plate 800 are respectively formed on the outside of the busbar frame 300 on the basis of the battery cell stack 100, so that it can be formed so as to cover the battery cell stack 100 and the busbar frame 300.

The end plate 800 can protect the busbar frame 300, the battery cell stack 100, and various electrical equipment connected thereto from external impacts, and at the same time, guide the electrical connection between the battery cell stack 100 and an external power. An insulating cover 700 can be inserted between the end plate 800 and the busbar frame 300. The insulating cover 700 may cut off the electrical connection between the busbar frame 300 and the outside to ensure the insulation performance of the battery module.

A thermal conductive resin layer 900 can be formed on the bottom surface 200 of the module frame bottom. The battery cell stack 100 is located on the upper side of the thermal conductive resin layer 900, and heat generated from the battery cell stack 100 can be transferred to the outside of the battery module. According to this embodiment, the thermal conductive resin layer 900 may be formed of a thermal resin.

According to the embodiment of the present invention, the battery module includes a connecting portion 400 that connects the busbar frames 300 arranged at both ends, respectively, and is formed of a flexible flat cable (FFC). The connecting portion 400 may be formed so as to be parallel to the longitudinal direction of any one of the plurality of battery cells constituting the battery cell stack 100.

Since the connecting portion 400 can be formed of a soft cable to be curved, the circuit for electrical connection between the busbar frames is inserted in the inside of the cable, thereby being easy to cope with external impacts.

The connector 500 is formed on the busbar frame 300 and coupled with the connecting portion 400. The connector 500 can sense information such as voltage and temperature of a plurality of battery cells constituting the battery cell stack 100. The connecting portion 400 may transmit information sensed from the rear surface of the battery cell stack 100 to the connector 500 located on the front surface portion of the battery cell stack 100.

According to the embodiment of the present invention, a film portion 600 is formed between the connector 500 and the upper side portion 210 of the module frame 200. The film portion 600 may guide moisture formed on the lower side surface of the upper side portion 210 of the module frame 200 to a passage formed between the insulating cover 700 and the end plate 800. The film portion 600 may include a polycarbonate sheet.

Conventionally, moistures formed on the lower side of the upper side portion of the module frame flows into a connector having an open upper side, and a short circuit phenomenon due to moisture may occur inside the connector. Therefore, according to the embodiment of the present invention, it is configured such that the film portion 600 is installed between the connector 500 and the upper side portion 210 of the module frame 200, and moistures formed on the lower surface of the upper side portion 210 moves along the upper side surface of the film portion 600, and without falling on the portion where the connector 500 is located, they immediately pass through the upper surface of the insulating cover 700, pass through the passage P between the insulating cover 700 and the end plate 800, and fall to the outside of the battery module.

When the battery module to which the FFC vertical assembly is applied through this moisture discharge structure is placed under environmental conditions with high temperature and high humidity, it is possible to prevent the inflow of moisture into the connector 500 and thus, protect the sensing function of checking the state of the battery module.

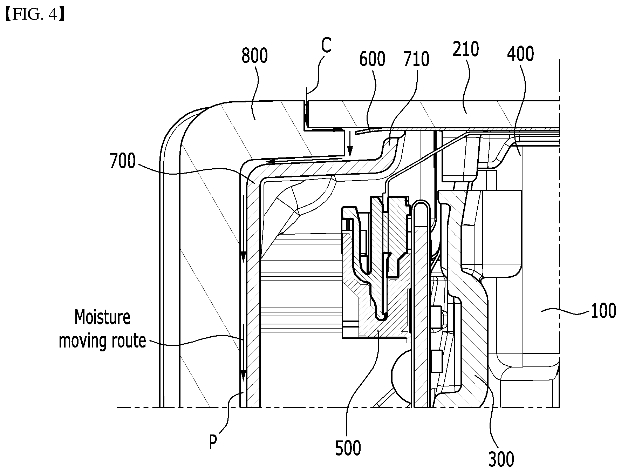

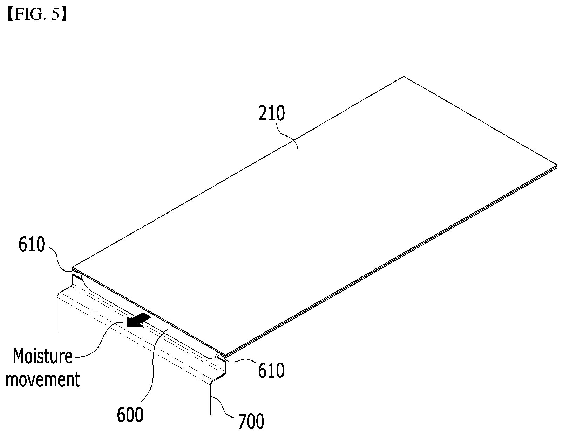

Below, a battery module in which a film portion is formed in accordance with one embodiment of the present invention will be described with reference to Figs. 2, 4 and 5. Fig. 4 is a cross-sectional view showing a section A-A' of Fig. 3. Fig. 5 is a partial view showing the direction in which moisture moves through the moisture barrier film.

According to the embodiment of the present invention, the insulating cover 700 may include an extension portion 710 that is extendedly formed on the lower side of the film portion 600. Therefore, moisture flowing along the upper side surface of the film portion 600 may fall to the upper surface of the insulating cover 700 without falling to the portion where the connector 500 is located. The extension portion 710 may be formed so as to be inclined in a direction in which the end plate 800 is located. The tip end of the extension portion 710 is formed to be curved upward, and the upper side surface of the extension portion 710 may be formed in an inclined manner. Therefore, it is possible to prevent the phenomenon in which the moisture falling on the upper surface of the insulating cover 700 reversely flows in the direction of the tip end of the extension portion 710 and falls to the position where the connector 500 is located.

Moisture that has fallen to the upper side of the insulating cover 700 can move in the direction in which the end plate 800 is located along the inclined upper side surface of the insulating cover 700. A passage P may be formed between the end plate 800 and the insulating cover 700. Moisture guided in the direction in which the end plate 800 is located can be discharged to the outside of the module frame 200 through the passage P formed between the end plate 800 and the insulating cover 700.

Further, according to the embodiment of the present disclosure, a crack C may be formed between the upper side portion 210 of the module frame 200 and the end plate 800. The crack C may be connected with the upper side surface of the insulating cover 700 and the upper side surface of the extension portion 710. In some cases, moisture may be flown in from the outside of the battery module. At this time, moisture may be flown into the crack C between the end plate 800 and the module frame 200 at the upper side of the battery module. Even in this case, the inflowed moisture is guided to the upper part of the insulating cover 700, and the guided moisture may be discharged to the outside of the module frame 200 through the passage P formed between the end plate 800 and the insulating cover 700.

The film portion 600 may be formed into a size corresponding to the module frame upper side portion 210. In this case, both side edge portions 210a and 210b of the module frame upper side portion 210 and the film portion 600 may be coupled to each other by an adhesive member 610. Further, referring to Fig. 5, a moisture moving passage may be formed in a space formed between the adhesive members 610. According to this embodiment, the adhesive member 610 may be formed of a double-sided tape.

The film portion 600 formed of a thin film is attached to the lower edge portion of the module frame upper side portion 210 through an adhesive member 610 formed of a double-sided tape, thereby capable of minimizing a space occupancy in the battery module due to the film portion 600 and the adhesive member 610.

The above-mentioned battery module can be included in the battery pack. The battery pack may have a structure in which one or more of the battery modules according to the embodiment of the present disclosure are gathered, and packed together with a battery management system (BMS) and a cooling device that control and manage battery's temperature, voltage, etc.

The battery pack can be applied to various devices. Such a device may be applied to a vehicle means such as an electric bicycle, an electric vehicle, or a hybrid vehicle, but the present invention is not limited thereto, and is applicable to various devices that can use a battery module, which also falls under the scope of the present invention.

Although the invention has been shown and described with reference to the preferred embodiments, the invention is defined solely by the scope of the appended claims.

### [Description of Reference Numerals]

100: battery cell stack
200: module frame
210: upper side portion
210a, 210b: both side edges
300: busbar frame
400: connecting portion
500: connector
600: film portion
610: adhesive member
700: insulating cover
710: extension portion
800: end plate
900: thermal conductive resin layer
P: passage
C: crack

## Claims

1. A battery module comprising:
a battery cell stack (100) in which a plurality of battery cells are stacked;
a module frame (200) for accommodating the battery cell stack (100);
a busbar frame (300) formed at both ends of the battery cell stack (100), respectively;
a connecting portion (400) that connects the busbar frames (300) arranged at both ends, respectively, and is formed of a flexible flat cable (FFC); and
a connector (500) for sensing voltage and temperature of the plurality of battery cells constituting the battery cell stack (100) formed on the busbar frame (300) and coupled to the connecting portion (400),
**characterized in that** a film portion (600) is formed between the connector (500) and the upper side portion (210) of the module frame (200),
and **in that** the battery module further comprises:
an insulating cover (700) for covering an outside of the busbar frame (300); and
an end plate (800) for covering an outside of the insulating cover (700),
wherein the film portion (600) is adapted to guide inflowed moisture formed on the lower side surface of the upper side portion (210) of the module frame (200) to a passage (P) formed between the end plate (800) and the insulating cover (700).

2. The battery module of claim 1, wherein:
the insulating cover (700) comprises an extension portion (710) that is extendedly formed on the lower side of the film portion (600).

3. The battery module of claim 2, wherein:
the extension portion (710) is formed so as to be inclined downward in a direction in which the end plate (800) is located.

4. The battery module of claim 2, wherein:
the tip end of the extension portion (710) is formed so as to be curved upward.

5. The battery module of claim 2, wherein:
a crack (C) between the upper side portion (210) of the module frame (200) and the end plate (800) is connected with the extension portion (710).

6. The battery module of claim 1, wherein:
the passage (P) is connected with the outside of the module frame (200), and
moisture guided to the passage (P) is discharged to the outside of the module frame (200) through the passage (P).

7. The battery module of claim 1, wherein:
the film portion (600) is formed into a size corresponding to the upper side portion (210) of the module frame (200).

8. The battery module of claim 7, wherein:
the film portion (600) is coupled with both side edge portions (210a, 210b) of the upper side portion (210) of the module frame (200) by adhesive members (610), respectively, and
a moisture moving passage is formed in a space formed between the adhesive members (610).

9. The battery module of claim 1, wherein:
the film portion (600) is formed of a polycarbonate sheet.

10. A battery pack comprising the battery module of claim 1.

## Patentansprüche

1. Batteriemodul, umfassend:
einen Batteriezellenstapel (100), in welchem eine Mehrzahl von Batteriezellen gestapelt sind;
einen Modulrahmen (200) zum Beherbergen des Batteriezellenstapels (100);
einen Stromschienenrahmen (300), welcher jeweils an beiden Enden des Batteriezellenstapels (100) gebildet ist;
einen Verbindungsabschnitt (400), welcher die Stromschienenrahmen (300) verbindet, welche jeweils an beiden Enden angeordnet sind, und aus einem flexiblen, flachen Kabel (FFC) gebildet ist; und
einen Verbinder (500) zum Erfassen einer Spannung und einer Temperatur der Mehrzahl von Batteriezellen, welche den Batteriezellenstapel (100) darstellen,
welcher auf dem Stromschienenrahmen (300) gebildet und mit dem Verbindungsabschnitt (400) gekoppelt ist,
**dadurch gekennzeichnet, dass** ein Folienabschnitt (600) zwischen dem Verbinder (500) und dem oberen Seitenabschnitt (210) des Modulrahmens (200) gebildet ist,
und dadurch, dass das Batteriemodul ferner umfasst:
eine Isolationsabdeckung (700) zum Abdecken eines Äußeren des Stromschienenrahmens (300); und
eine Endplatte (800) zum Abdecken eines Äußeren der Isolationsabdeckung (700),
wobei der Folienabschnitt (600) dazu angepasst ist, eingeflossene Feuchtigkeit, welche sich an der unteren Seitenfläche des oberen Seitenabschnitts (210) des Modulrahmens (200) gebildet hat, zu einer Passage (P) zu leiten, welche zwischen der Endplatte (800) und der Isolationsabdeckung (700) gebildet ist.

2. Batteriemodul nach Anspruch 1, wobei:
die Isolationsabdeckung (700) einen Erstreckungsabschnitt (710) umfasst,
welcher sich erstreckend auf der Unterseite des Folienabschnitts (600) gebildet ist.

3. Batteriemodul nach Anspruch 2, wobei:
der Erstreckungsabschnitt (710) gebildet ist, um nach unten in eine Richtung geneigt zu sein, in welcher die Endplatte (800) angeordnet ist.

4. Batteriemodul nach Anspruch 2, wobei:
das Spitzenende des Erstreckungsabschnitts (710) gebildet ist, um nach oben gekrümmt zu sein.

5. Batteriemodul nach Anspruch 2, wobei:
ein Spalt (C) zwischen dem oberen Seitenabschnitt (210) des Modulrahmens (200) und der Endplatte (800) mit dem Erstreckungsabschnitt (710) verbunden ist.

6. Batteriemodul nach Anspruch 1, wobei:
die Passage (P) mit dem Äußeren des Modulrahmens (200) verbunden ist, und Feuchtigkeit, welche zu der Passage (P) geleitet worden ist, zu dem Äußeren des Modulrahmens (200) durch die Passage (P) ausgelassen wird.

7. Batteriemodul nach Anspruch 1, wobei:
der Folienabschnitt (600) in einer Größe gebildet ist, welche dem oberen Seitenabschnitt (210) des Modulrahmens (200) entspricht.

8. Batteriemodul nach Anspruch 7, wobei:
der Folienabschnitt (600) jeweils mit beiden Seitenrandabschnitten (210a, 210b) des oberen Seitenabschnitts (210) des Modulrahmens (200) durch Haftelemente (610) gekoppelt ist, und
eine Feuchtigkeitsbewegungspassage in einem Raum gebildet ist, welcher zwischen den Haftelementen (610) gebildet ist.

9. Batteriemodul nach Anspruch 1, wobei:
der Folienabschnitt (600) aus einem Polycarbonat-Bogen gebildet ist.

10. Batteriepack umfassend das Batteriemodul nach Anspruch 1.

## Revendications

1. Module de batterie comprenant :
un empilement de cellules de batterie (100) dans lequel une pluralité de cellules de batterie sont empilées ;
un châssis de module (200) pour loger l'empilement de cellules de batterie (100) ;
un châssis de barre omnibus (300) formé aux deux extrémités de l'empilement de cellules de batterie (100), respectivement ;
une partie de connexion (400) qui connecte les châssis de barre omnibus (300) agencés aux deux extrémités, respectivement, et est formée d'un câble plat souple (FFC) ; et
un connecteur (500) pour détecter une tension et une température de la pluralité de cellules de batterie constituant l'empilement de cellules de batterie (100) formé sur le châssis de barre omnibus (300) et couplé à la partie de connexion (400),
**caractérisé en ce qu'**une partie de film (600) est formée entre le connecteur (500) et la partie latérale supérieure (210) du châssis de module (200),
et **en ce que** le module de batterie comprend en outre :
un couvercle isolant (700) pour recouvrir un extérieur du châssis de barre omnibus (300) ; et
une plaque d'extrémité (800) pour recouvrir un extérieur du couvercle isolant (700),
dans lequel la partie de film (600) est adaptée pour guider l'humidité entrante formée sur la surface latérale inférieure de la partie latérale supérieure (210) du châssis de module (200) vers un passage (P) formé entre la plaque d'extrémité (800) et le couvercle isolant (700).

2. Module de batterie selon la revendication 1, dans lequel :
le couvercle isolant (700) comprend une partie d'extension (710) qui est formée de manière à s'étendre sur le côté inférieur de la partie de film (600).

3. Module de batterie selon la revendication 2, dans lequel :
la partie d'extension (710) est formée de manière à être inclinée vers le bas dans une direction dans laquelle la plaque d'extrémité (800) est située.

4. Module de batterie selon la revendication 2, dans lequel :
l'extrémité d'extrémité de la partie d'extension (710) est formée de manière à être incurvée vers le haut.

5. Module de batterie selon la revendication 2, dans lequel :
une fissure (C) entre la partie latérale supérieure (210) du châssis de module (200) et la plaque d'extrémité (800) est connectée à la partie d'extension (710).

6. Module de batterie selon la revendication 1, dans lequel :
le passage (P) est connecté à l'extérieur du châssis de module (200), et
l'humidité guidée vers le passage (P) est évacuée vers l'extérieur du châssis de module (200) à travers le passage (P).

7. Module de batterie selon la revendication 1, dans lequel :
la partie de film (600) est formée en une taille correspondant à la partie latérale supérieure (210) du châssis de module (200).

8. Module de batterie selon la revendication 7, dans lequel :
la partie de film (600) est couplée aux deux parties de bord latéral (210a, 210b) de la partie latérale supérieure (210) du châssis de module (200) par des éléments adhésifs (610), respectivement, et
un passage de circulation d'humidité est formé dans un espace formé entre les éléments adhésifs (610).

9. Module de batterie selon la revendication 1, dans lequel :
la partie de film (600) est formée d'une feuille de polycarbonate.

10. Bloc-batterie comprenant le module de batterie selon la revendication 1.
